# FASCICULE DE BREVET EUROPEEN

(11) **EP 2 500 266 B1**
(45) Date de publication et mention de la délivrance du brevet: **11.05.2016**
(21) Numéro de dépôt: 12158374.4
(22) Date de dépôt: 07.03.2012
(51) Int. Cl.: B64C 13/50, F15B 15/18, F15B 21/08, F15B 7/00

(54) **Actionneur à puissance électrique et procédé de commande d'un tel actionneur.**
Elektrisch betriebene Antrieb und Steuerverfahren.
Electrically powered actuator and control method.

(30) Priorité: 15.03.2011 FR 1152095
(43) Date de publication de la demande: 19.09.2012
(73) Titulaire: Airbus Opérations SAS, 31060 Toulouse (FR)
(72) Inventeur: Babando, Olivier, 31100 TOULOUSE (FR); Steiner, Laurent, 31270 CUGNAUX (FR)
(74) Mandataire: Gevers & Orès

(56) Documents cités:
- FR-A1- 2 807 007
- FR-A1- 2 946 401
- JP-A- 2002 054 604
- US-A1- 2003 061 811
- US-A1- 2008 236 156
- US-B1- 6 470 678
- US-B1- 7 191 593

## Description

La présente invention concerne un actionneur à puissance électrique et un procédé de commande d'un tel actionneur.

Un actionneur à puissance électrique, c'est-à-dire qui utilise une puissance électrique pour fonctionner, peut être destiné plus particulièrement, bien que non exclusivement, à actionner une gouverne d'aéronef, notamment d'un avion de transport, par exemple une gouverne de profondeur, une gouverne de direction ou une gouverne latérale d'un avion

Cet actionneur à puissance électrique peut être un actionneur électro-hydrostatique, de type EHA (« Electro-Hydrostatic Actuator» en anglais), qui comporte de façon usuelle, un module électronique, un moteur électrique, une pompe hydraulique, un clapet de surpression, un bloc hydraulique et un vérin hydraulique: Cet actionneur est contrôlé par un courant de commande envoyé au module électronique. Un asservissement local dans le module électronique convertit ce courant de commande en une consigne de vitesse pour le moteur électrique. Ce dernier entraîne la pompe hydraulique en utilisant une puissance électrique fournie par l'aéronef. La pompe engendre alors localement une puissance hydraulique pour déplacer le vérin hydraulique.

La présente invention peut également s'appliquer à un actionneur hydraulique à secours électrique, de type EBHA («Electrical Backup Hydraulic Actuator» en anglais), qui est un actionneur hybride comprenant les caractéristiques à la fois d'une servocommande hydraulique usuelle et d'un actionneur électro-hydrostatique de type EHA. En situation nominale (hors panne), l'actionneur EBHA fonctionne comme une servocommande usuelle. En revanche, en cas de panne affectant le mode hydraulique, cet actionneur EBHA passe en alimentation électrique et fonctionne comme un actionneur EHA.

De par sa technologie, un actionneur EHA est capable d'engendrer localement plus d'effort que le niveau maximal nécessaire à son fonctionnement. Il Existe donc le risque que la structure sur laquelle est monté l'actionneur EHA soit soumise à des efforts plus importants que le niveau pour lequel elle a été dimensionnée. Aussi, pour protéger cette structure, les actionneurs EHA sont généralement équipés d'au moins un clapet de surpression qui limite l'effort engendré par l'actionneur.

On notera que, dans certaines configurations, l'actionneur EHA peut être amené à fonctionner sur le clapet de surpression. Dans ce cas, le moteur tourne et la pompe hydraulique génère un flux qui circule dans le clapet de surpression au lieu d'alimenter les chambres du vérin.

Dans une telle situation, c'est-à-dire avec une circulation entretenue de fluide entre la pompe et le clapet de surpression, l'actionneur EHA peut s'endommager très rapidement jusqu'à ne plus être utilisable.

La panne de l'actionneur peut avoir deux origines différentes
- une surchauffe du fluide. Le fluide qui circule entre la pompe hydraulique et le clapet de surpression passe de la pression d'ouverture du clapet à la pression retour pompe lorsqu'il traverse le clapet de surpression, ce qui a pour conséquence de l'échauffer très rapidement. Cette chaleur emmagasinée dans le fluide est ensuite dissipée dans tout l'actionneur. L'augmentation de température qui en résulte peut entraîner rapidement l'endommagement de l'actionneur ; et
- une surchauffe de l'électronique de commande. Lorsque le clapet de surpression est ouvert et que du fluide le traverse, le moteur électrique doit fournir un couple élevé pour provoquer l'ouverture du clapet, à une vitesse fonction de l'erreur d'asservissement qui peut donc atteindre la vitesse maximale. Pour maintenir ce couple élevé, un courant, également élevé, doit circuler dans le module électronique de l'actionneur. Comme l'électronique de l'actionneur n'est pas dimensionnée pour supporter un tel niveau de courant en permanence, ce dernier peut s'endommager rapidement.

Par le document FR-2 946 401 de la demanderesse, on connaît un actionneur à puissance électrique qui permet de remédier aux inconvénients précités. Cet actionneur est du type comportant un module de commande, un moteur électrique qui entraîne une pompe conformément à une valeur de consigne reçue dudit module de commande, un vérin hydraulique qui comprend deux chambres susceptibles d'être alimentées par la pompe et qui engendre l'effort de l'actionneur, ainsi qu'au moins un clapet de surpression pour limiter l'effort engendré par l'actionneur. Selon le document FR-2 946 401, cet actionneur comporte, de plus, des moyens pour mesurer la différence de pression existant entre les deux chambres du vérin hydraulique, des moyens pour calculer un paramètre correctif à l'aide de cette différence de pression, et des moyens pour calculer, à partir dudit paramètre correctif, une valeur de consigne auxiliaire qui permet, lorsqu'elle est appliquée au moteur électrique, de limiter la différence de pression entre les deux chambres du vérin hydraulique à une pression limite qui est inférieure à une pression d'ouverture du clapet de surpression. Ainsi, pour protéger l'actionneur à puissance électrique contre un endommagement dû à une surchauffe, le document FR-2 946 401 prévoit des moyens permettant d'éviter, lors de son fonctionnement, l'ouverture du ou des clapets de surpression, et ainsi d'empêcher une surchauffe.

Bien qu'efficace, la solution proposée par le document FR-2 946 401 ne peut pas être utilisée si la précision des capteurs et les caractéristiques des clapets de surpression des actionneurs sont telles qu'elles ne permettent pas d'empêcher l'ouverture des clapets, tout en respectant les exigences de performances des actionneurs.

Par ailleurs, on connaît par le document US-6 470 678 un actionneur à puissance électrique. Cet actionneur comprend un module de commande, un moteur électrique, un vérin hydraulique à double chambre et une pluralité de valves et clapets.

La présente invention propose une solution alternative permettant de remédier aux inconvénients précités.

A cet effet, selon l'invention, ledit actionneur du type comportant :
- un module de commande qui reçoit un signal électrique de commande et qui convertit ce signal électrique de commande en une valeur de consigne pour un moteur électrique ;
- ledit moteur électrique qui entraîne une pompe conformément à ladite valeur de consigne reçue dudit module de commande ;
- ladite pompe qui génère une puissance hydraulique permettant de déplacer un vérin hydraulique ;
- ledit vérin hydraulique qui comprend deux chambres susceptibles d'être alimentées par ladite pompe et qui engendre l'effort de l'actionneur, lesdites chambres étant séparées par un piston relié à une tige ; et
- au moins un clapet de surpression pour limiter l'effort engendré par ledit actionneur, ledit clapet de surpression étant ouvert automatiquement de manière à réaliser sa fonction de limitation lorsque la différence de pression entre les deux chambres atteint une valeur prédéterminée, est remarquable en ce qu'il comporte de plus :
   - des premiers moyens pour réaliser une surveillance de manière à pouvoir détecter une ouverture dudit clapet de surpression ;
   - des deuxièmes moyens pour calculer, lors de la détection d'une ouverture dudit clapet de surpression, une valeur de consigne auxiliaire qui permet, lorsqu'elle est appliquée au moteur électrique, de limiter la vitesse de ce dernier à une vitesse maximale prédéterminée ; et
   - des troisièmes moyens pour appliquer audit moteur électrique ladite valeur de consigne auxiliaire, à la place de ladite valeur de consigne, lors de la détection d'une ouverture dudit clapet de surpression.

Ainsi, grâce à l'invention,: pour protéger l'actionneur à puissance électrique contre un endommagement dû à une surchauffe, on prévoit des moyens destinés à calculer une valeur de consigne auxiliaire qui sera appliquée au moteur électrique, lors de la détection d'une ouverture dudit clapet de surpression. Cette valeur de consigne auxiliaire est appliquée au moteur électrique pour qu'il limite sa vitesse et donc son action sur la pompe hydraulique. La vitesse est limitée à ladite vitesse maximale prédéterminée, qui est inférieure à la vitesse maximale autorisée du moteur et qui est définie de manière à empêcher une surchauffe de l'actionneur susceptible de l'endommager lorsqu'elle est appliquée au moteur, même de manière permanente.

Dans un mode de réalisation préféré, lesdits premiers moyens comportent:
- un premier élément pour mesurer la vitesse moteur courante dudit moteur électrique ;
- un deuxième élément pour mesurer la vitesse courante de la tige dudit vérin hydraulique;
- un troisième élément pour calculer, à partir de la vitesse courante mesurée de ladite tige, une vitesse moteur estimée, qui représente la vitesse du moteur permettant d'engendrer ladite vitesse courante mesurée pour la tige du vérin hydraulique ;
- un quatrième élément pour calculer la différence entre ladite vitesse moteur estimée et ladite vitesse moteur courante ; et
- un cinquième élément pour comparer cette différence à une valeur maximale prédéterminée, et pour détecter une ouverture dudit clapet de surpression, pour laquelle on applique ladite valeur de consigne auxiliaire audit moteur électrique, lorsque cette différence est supérieure à cette valeur maximale prédéterminée.

En outre, avantageusement, lesdits premiers moyens comportent, de plus, un sixième élément pour filtrer ladite différence entre ladite vitesse moteur estimée et ladite vitesse moteur courante, avant de la transmettre audit cinquième élément.

Par ailleurs, dans un mode de réalisation préféré, ledit troisième élément comporte des moyens pour calculer ladite vitesse moteur estimée Vest, à l'aide de l'expression suivante :
Vest = (S.Vram)/cyl
dans laquelle :
- S représente la surface de la section transversale du piston dudit vérin hydraulique ;
- Vram est la vitesse courante mesurée de la tige du vérin hydraulique ; et
- cyl représente la cylindrée de la pompe (c'est-à-dire le volume de fluide déplacé lorsque la pompe fait un tour).

Selon l'invention, ledit actionneur comporte de plus :
- des moyens pour déterminer si le signal électrique de commande reçu a pour effet d'engendrer une différence de pression croissante ou une différence de pression décroissante dans le vérin hydraulique ; et
- des moyens pour inhiber l'application le cas échéant de ladite valeur de consigne auxiliaire audit moteur électrique (et donc appliquer ladite valeur de consigne), lorsque ledit signal électrique de commande reçu a pour effet d'engendrer une différence de pression décroissante en valeur absolue, c'est-à-dire une différence de pression qui a tendance à diminuer.

Ainsi, on inhibe l'application de la valeur de consigne auxiliaire, c'est-à-dire la limitation de l'effort engendré par l'actionneur, lorsque la valeur de consigne appliquée a pour objet de réduire la différence de pression existant entre les deux chambres du vérin hydraulique. Dans ce cas, on fournit la pleine autorité à l'actionneur pour réduire cette différence de pression, en désactivant la fonction de protection (c'est-à-dire de limitation) précitée.

La présente invention concerne également un système de commande d'une gouverne, en particulier d'une gouverne (latérale, de direction, de profondeur) d'un aéronef, notamment d'un avion de transport. Ce système de commande du type comportant :
- un moyen de commande permettant d'engendrer un signal électrique de commande ; et
- un actionneur qui reçoit ledit signal électrique de commande et qui engendre un effort sur la gouverne en fonction dudit signal électrique de commande,
est remarquable en ce que ledit actionneur est du type précité conforme à l'invention.

La présente invention concerne également un aéronef, en particulier un avion de transport, qui comporte un actionneur et/ou un système de commande de gouverne, tels que ceux précités.

Par ailleurs, la présente invention concerne un procédé de commande d'un actionneur du type précité. Ce procédé a pour objet de protéger automatiquement l'actionneur contre une surchauffe lors d'un fonctionnement.

Selon l'invention, ledit procédé est remarquable en ce que, de façon automatique, on réalise une surveillance de manière à pouvoir détecter une ouverture d'un clapet de surpression, et lors de la détection d'une ouverture d'un clapet de surpression, de façon automatique :
- on calcule une valeur de consigne auxiliaire qui permet, lorsqu'elle est appliquée au moteur électrique, de limiter la vitesse de ce dernier à une vitesse maximale prédéterminée ; et
- on applique audit moteur électrique ladite valeur de consigne auxiliaire, à la place de ladite valeur de consigne.

Ainsi, grâce à l'invention, on limite la vitesse du moteur électrique lors de l'ouverture dudit clapet de surpression et donc son action sur la pompe hydraulique. La vitesse est limitée à ladite vitesse maximale prédéterminée, qui est inférieure à la vitesse maximale autorisée du moteur et qui est définie de manière à empêcher une surchauffe de l'actionneur susceptible de l'endommager lorsqu'elle est appliquée au moteur.

De façon avantageuse, pour réaliser ladite surveillance :
- on mesure la vitesse moteur courante dudit moteur électrique,
- on mesure la vitesse de la tige dudit vérin hydraulique ;
- on calcule, à partir de la vitesse courante mesurée de ladite tige, une vitesse moteur estimée, qui représente la vitesse du moteur permettant d'engendrer ladite vitesse courante mesurée pour la tige du vérin hydraulique ;
- on calcule la différence entre ladite vitesse moteur estimée et ladite vitesse moteur courante ; et
- on compare cette différence à une valeur maximale prédéterminée, et on détecte une ouverture dudit clapet de surpression, pour laquelle on applique ladite valeur de consigne auxiliaire audit moteur électrique, lorsque cette différence est supérieure à cette valeur maximale prédéterminée.

De préférence, on filtre ladite différence entre la vitesse moteur estimée et la vitesse moteur courante, avant de la comparer à ladite valeur maximale prédéterminée.

En outre, avantageusement, on calcule ladite vitesse moteur estimée Vest, à l'aide de l'expression suivante :
Vest = (S.Vram)/cyl
dans laquelle :
- S représente la surface de la section transversale du piston dudit vérin hydraulique ;
- Vram est la vitesse courante mesurée de la tige du vérin hydraulique ; et
- cyl représente la cylindrée de la pompe (c'est-à-dire le volume de fluide déplacé lorsque la pompe fait un tour).

Selon l'invention, de façon automatique et répétitive :
- on détermine si le signal électrique de commande reçu a pour effet d'engendrer une différence de pression croissante ou une différence de pression décroissante dans le vérin hydraulique ; et
- on inhibe le cas échéant l'application de ladite valeur de consigne auxiliaire, lorsque ledit signal électrique de commande reçu a pour effet d'engendrer une différence de pression décroissante en valeur absolue.

La procédé conforme à la présente invention permet donc :
- de garantir la charge d'arrêt de l'actionneur, spécifiée par les qualités de vol ;
- d'accepter l'ouverture du clapet de surpression, en contrôlant la vitesse du moteur de l'actionneur de manière à limiter la surchauffe ; et
- de ne pas utiliser la mesure du capteur de différence de pression entre les chambres de l'actionneur (excepté pour connaître le signe de la différence de pression afin d'activer ou non la fonction de limitation de surchauffe conforme à l'invention).

Les figures du dessin annexé feront bien comprendre comment l'invention peut être réalisée. Sur ces figures, des références identiques désignent des éléments semblables.
La figure 1 illustre schématiquement un actionneur conforme à l'invention.
La figure 2 est le schéma synoptique d'un système de commande de gouverne conforme à l'invention.
Les figures 3 et 4 montrent schématiquement des moyens faisant partie d'un actionneur conforme à l'invention.

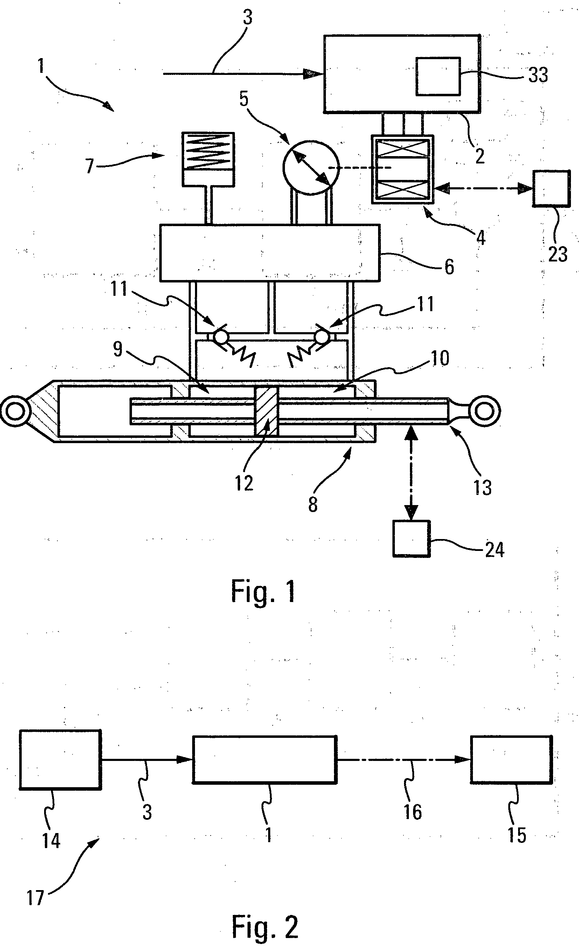

L'actionneur 1 conforme à l'invention et représenté schématiquement sur la figure 1 est un actionneur à puissance électrique, c'est-à-dire un actionneur qui utilise une puissance électrique pour fonctionner. Cet actionneur 1 est destiné à actionner (c'est-à-dire à déplacer) un organe mécanique, en particulier une gouverne d'un aéronef, notamment d'un avion de transport. Selon l'invention, cet actionneur 1 est perfectionné de manière à être protégé contre un endommagement dû à une surchauffe.

Ledit actionneur 1 est du type comportant :
- un module de commande électronique 2 qui reçoit un signal électrique de commande (précisé ci-dessous) par l'intermédiaire d'une liaison 3 et qui convertit ce signal électrique de commande en une valeur de consigne (de vitesse) 10 pour un moteur électrique 4 ;
- ledit moteur électrique 4 qui entraîne une pompe hydraulique 5, conformément à la valeur de consigne de vitesse I0 reçue dudit module de commande 2 ;
- ladite pompe 5 qui est associée à un bloc hydraulique 6 comprenant, de plus, un accumulateur 7 et qui engendre une puissance hydraulique conformément à l'entraînement réalisé par ledit moteur électrique 4. Cette puissance hydraulique permet de déplacer un vérin hydraulique 8 ; et
- ledit vérin hydraulique 8 qui comprend deux chambres 9 et 10 susceptibles d'être alimentées par ladite pompe 5 et séparées par un piston 12 relié à une tige 13. Ledit vérin hydraulique 8 est déplacé, de façon usuelle, en fonction de la différence de pression régnant dans ces deux chambres 9 et 10. Le déplacement dudit vérin hydraulique 8 engendre l'effort produit par l'actionneur 1 sur l'organe mécanique qu'il actionne, en particulier une gouverne d'aéronef.

Ledit actionneur 1 comporte, de plus, un ou plusieurs clapets de surpression usuels 11 qui permettent de limiter l'effort qu'il engendre. Chaque clapet de surpression 11 est associé à une pression d'ouverture qui représente une différence de pression entre les chambres 9 et 10, pour laquelle le clapet de surpression 11 est ouvert automatiquement de manière à réaliser sa fonction de protection. En effet, de façon usuelle, un clapet de surpression est formé de manière à s'ouvrir automatiquement sous l'effet d'une pression prédéterminée de fluides, à alors évacuer un débit de fluide de façon à limiter la pression dans les chambres et à se refermer lorsque des conditions de service normales ont été rétablies.

Ledit actionneur 1 qui est un actionneur à puissance électrique peut correspondre à un actionneur électro-hydrostatique, de type EHA (« Electro-Hydrostatic Actuator» en anglais). Il peut également s'agir d'un actionneur hydraulique à secours électrique, de type EBHA («Electrical Backup Hydraulic Actuator» en anglais), lorsqu'il fonctionne en mode électrique. Cet actionneur EBHA est un actionneur hybride comprenant les caractéristiques à la fois d'une servocommande hydraulique usuelle et d'un actionneur électro-hydrostatique de type EHA. En situation nominale (hors panne), l'actionneur EBHA fonctionne comme une servocommande usuelle. En revanche, en cas de panne affectant le mode hydraulique, cet actionneur EBHA passe en mode électrique et fonctionne comme un actionneur EHA.

Bien que non exclusivement, ledit actionneur 1 peut être utilisé plus particulièrement pour actionner une gouverne d'aéronef, notamment d'un avion de transport, par exemple une gouverne de profondeur, une gouverne de direction ou une gouverne latérale d'un avion. Dans une telle application, ledit actionneur 1 peut faire partie d'un système 17 de commande de gouverne qui comporte, de plus, comme représenté sur la figure 2 :
- un moyen de commande 14 qui permet d'engendrer le signal électrique de commande qui est transmis par l'intermédiaire de la liaison 3 au module de commande 2 de l'actionneur 1. Ce moyen de commande 14 peut comporter des moyens manuels usuels, par exemple un manche ou organe de commande, permettant à un opérateur, en particulier le pilote de l'aéronef, d'engendrer un signal de commande en vue du déplacement d'une gouverne 15. Ce moyen de commande 14 peut également comporter des moyens automatiques usuels permettant d'engendrer, de façon automatique, en particulier à partir de valeurs mesurées, un signal électrique de commande ; et
- ladite gouverne 15, par exemple une gouverne latérale, de profondeur ou de direction, qui est déplacée par ledit actionneur 1 (ou par une pluralité d'actionneurs 1), comme illustré par une liaison 16 en traits mixtes sur la figure 2.

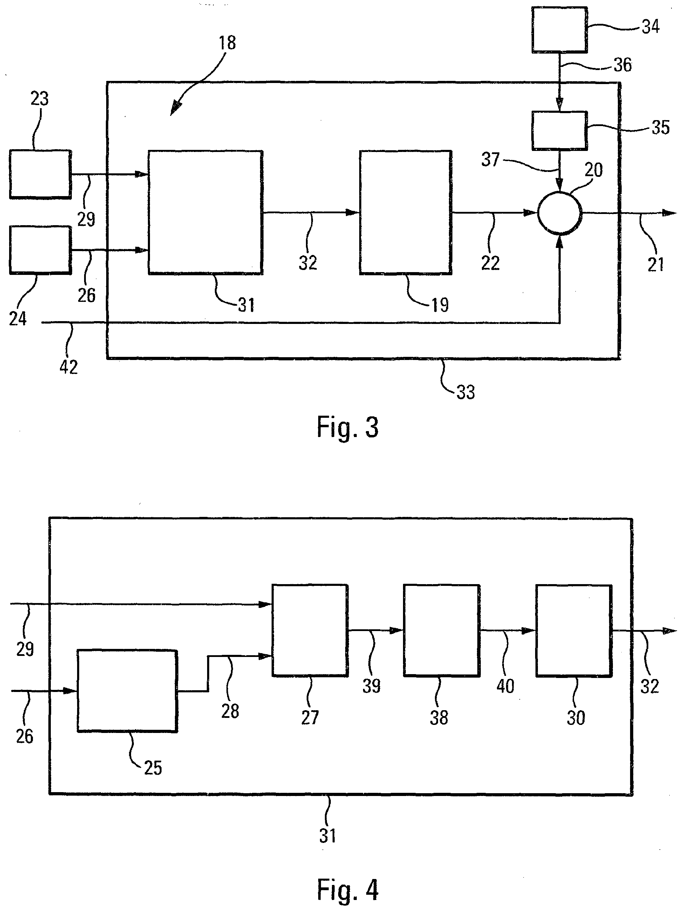

Selon l'invention, pour protéger un tel actionneur 1 contre des endommagements dus à une surchauffe, ce dernier comporte de plus, comme représenté sur la figure 3 :
- des moyens 18 pour réaliser une surveillance de manière à pouvoir détecter une ouverture d'un clapet de surpression 11 ;
- des moyens 19 pour calculer, lors de la détection d'une ouverture d'un clapet de surpression 11, une valeur de consigne auxiliaire laux qui permet, lorsqu'elle est appliquée au moteur électrique 4, de limiter la vitesse de ce dernier à une vitesse maximale prédéterminée ; et
- des moyens 20 pour appliquer (via une liaison 21) audit moteur électrique 4 ladite valeur de consigne auxiliaire laux (reçue des moyens 19 par une liaison 22), à la place de ladite valeur de consigne 10, lors de la détection d'une ouverture d'un clapet de surpression 11.

Par conséquent, pour être protégé contre un endommagement dû à une surchauffe, l'actionneur 1 à puissance électrique est pourvu de moyens 19 destinés à calculer une valeur de consigne auxiliaire laux qui sera appliquée au moteur électrique 4, lors de la détection (par les moyens 18) d'une ouverture dudit clapet de surpression 11. Cette valeur de consigne auxiliaire laux est appliquée au moteur électrique 4 pour qu'il limite sa vitesse et donc son action sur la pompe hydraulique 5. Sa vitesse est alors limitée à ladite vitesse maximale prédéterminée, qui est inférieure à la vitesse maximale autorisée du moteur 4. Cette vitesse maximale prédéterminée est définie de manière à empêcher une surchauffe de l'actionneur 1 susceptible de l'endommager lorsqu'elle est appliquée au moteur 4. Cette vitesse maximale est déterminée de façon usuelle, en particulier à l'aide de tests.

Dans un mode de réalisation préféré, lesdits moyens 18 comportent :
- un capteur usuel 23 pour mesurer la vitesse moteur courante du moteur électrique 4 ;
- un capteur usuel 24 pour mesurer la vitesse courante de déplacement de la tige 13 du vérin hydraulique 8 ; et
- une unité de traitement 31 qui est reliée par une liaison 32 aux moyens 19 et qui comprend, comme représenté sur la figure 4 :
   - un élément 25 pour calculer une vitesse moteur estimée, à partir de la vitesse courante mesurée de ladite tige 13 et reçue par une liaison 26 du capteur 24. La vitesse moteur estimée représente la vitesse du moteur 4 permettant d'engendrer ladite vitesse courante mesurée pour la tige 13 du vérin hydraulique 8 ;
   - un élément 27 pour calculer la différence entre ladite vitesse moteur estimée (reçue par une liaison 28 de l'élément 25) et ladite vitesse moteur courante mesurée (reçue par une liaison 29 du capteur 23) ; et
   - un élément 30 pour comparer cette différence à une valeur maximale ; prédéterminée, et pour détecter une ouverture d'un clapet de surpression 11, pour laquelle les moyens 20 doivent appliquer ladite valeur de consigne auxiliaire audit moteur électrique 4, lorsque cette différence est supérieure à cette valeur maximale prédéterminée.

En effet, lorsque le clapet de surpression 11 est ouvert, une partie du flux engendré par la pompe 5 (sous la commande du moteur 4) passe à travers le clapet de surpression 11, au lieu d'alimenter une chambre du vérin hydraulique 8. Comme cette partie de flux peut être importante, la vitesse de la tige 13. du vérin hydraulique 8 n'est plus proportionnelle à la vitesse du moteur 4.

De préférence, ladite unité de traitement 31 comporte, de plus, un élément 38 pour filtrer ladite différence (reçue par une liaison 39) entre la vitesse moteur estimée et la vitesse moteur courante, avant de la transmettre audit élément 30 (via une liaison 40), afin de ne pas tenir compte de modifications dynamiques de fréquences élevées.

Dans un mode de réalisation préféré, ledit élément 25 comporte des moyens (intégrés) pour calculer ladite vitesse moteur estimée Vest, à l'aide de l'expression suivante :
Vest = (S.Vram)/cyl
dans laquelle :
- S représente la surface de la section transversale du piston 12 du vérin hydraulique 8 ;
- Vram est la vitesse courante mesurée par le capteur 24 de la tige 13 du vérin hydraulique 8 : Vram =dy/dt, y représentant un déplacement de la tige 13 ; et
- cyl représente la cylindrée de la pompe 5 (c'est-à-dire le volume de fluide déplacé lorsque la pompe 5 fait un tour).

Dans un mode de réalisation particulier, ledit actionneur 1 comporte, de plus :
- des moyens 34 pour déterminer si le signal électrique de commande reçu par la liaison 3 a pour effet (s'il est appliqué tel quel à l'actionneur 1) d'engendrer une différence de pression croissante (c'est-à-dire une différence de pression qui augmente entre les chambres 9 et 10) ou une différence de pression décroissante (c'est-à-dire une différence de pression qui baisse entre les chambres 9 et 10) dans le vérin hydraulique 8 ; et
- des moyens 35 qui sont reliés par l'intermédiaire d'une liaison 36 auxdits moyens 34 et qui sont formés de manière à inhiber l'application le cas échéant de ladite valeur de consigne auxiliaire laux audit moteur électrique 4, lorsque ledit signal électrique de commande reçu a pour effet d'engendrer une différence de pression décroissante en valeur absolue, c'est-à-dire une différence de pression qui a tendance à diminuer. Pour cela, lesdits moyens 35 peuvent agir par l'intermédiaire d'une liaison 37 sur lesdits moyens 20 de sorte que ces derniers transmettent, par l'intermédiaire de la liaison 21, l'ordre de commande (à savoir ladite valeur de consigne I0) reçu par une liaison 42, en cas d'inhibition.

Dans un mode de réalisation préféré, lesdits moyens 19, 20, 31 et 35 font partie d'une unité 33 qui est intégrée dans le module de commande électronique 2.

La présente invention présente notamment les avantages suivants :
- elle permet de garantir la charge d'arrêt de l'actionneur 1, spécifiée par les qualités de vol ;
- elle autorise l'ouverture d'un clapet de surpression 11, en contrôlant la vitesse du moteur 4 de l'actionneur 1 de manière à limiter la surchauffe de l'équipement ; et
- elle n'utilise pas la mesure d'un capteur de différence de pression entre les chambres 9 et 10 de l'actionneur 1, qui peut manquer de précision, excepté pour connaître le signe de cette différence de pression afin de pouvoir inhiber la fonction de protection lorsque la différence de pression est décroissante.

## Revendications

1. Procédé de commande d'un actionneur (1) qui comporte :
- un module de commande (2) susceptible de recevoir un signal électrique de commande et susceptible de convertir ce signal électrique de commande en une valeur de consigne pour un moteur électrique (4) ;
- ledit moteur électrique (4) qui est susceptible d'entraîner une pompe (5) conformément à ladite valeur de consigne reçue dudit module de commande (2) ;
- ladite pompe (5) qui est susceptible de générer une puissance hydraulique permettant de déplacer un vérin hydraulique (8) ;
- ledit vérin hydraulique (8) qui comprend deux chambres (9,10) susceptibles d'être alimentées par ladite pompe (5) et qui est susceptible d'engendrer l'effort de l'actionneur (1), lesdites chambres (9,10) étant séparées par un piston relié à une tige ; et
- au moins un clapet de surpression (11) pour limiter l'effort engendré par ledit actionneur (1), ledit clapet de surpression (11) étant ouvert automatiquement de manière à réaliser sa fonction de limitation lorsque la différence de pression entre les deux chambres (9,10) atteint une valeur prédéterminée,
procédé selon lequel, de façon automatique, on réalise une surveillance de manière à pouvoir détecter une ouverture dudit clapet de surpression (11), et lors de la détection d'une ouverture dudit clapet de surpression (11), de façon automatique :
- on calcule une valeur de consigne auxiliaire qui permet, lorsqu'elle est appliquée au moteur électrique (4), de limiter la vitesse de ce dernier à une vitesse maximale prédéterminée qui est définie de manière à empêcher une surchauffe de l'actionneur (1) susceptible de l'endommager ;
- on applique audit moteur électrique (4) ladite valeur de consigne auxiliaire, à la place de ladite valeur de consigne ;
**caractérisé en ce que** :
- on détermine si le signal électrique de commande reçu a pour effet d'engendrer une différence de pression croissante ou une différence de pression décroissante dans le vérin hydraulique (8) ; et
- on inhibe le cas échéant l'application de ladite valeur de consigne auxiliaire audit moteur électrique (4), lorsque ledit signal électrique de commande reçu a pour effet d'engendrer une différence de pression décroissante en valeur absolue.

2. Procédé selon la revendication 1,
**caractérisé en ce que**, pour réaliser ladite surveillance :
- on mesure la vitesse moteur courante dudit moteur électrique (4) ;
- on mesure la vitesse de la tige (13) dudit vérin hydraulique (8) ;
- on calcule, à partir de la vitesse courante mesurée de ladite tige, une vitesse moteur estimée, qui représente la vitesse du moteur (4) permettant d'engendrer ladite vitesse courante mesurée pour la tige (13) du vérin hydraulique (8) ;
- on calcule la différence entre ladite vitesse moteur estimée et ladite vitesse moteur courante ; et
- on compare cette différence à une valeur maximale prédéterminée, et on détecte une ouverture dudit clapet de surpression (11), pour laquelle on applique ladite valeur de consigne auxiliaire audit moteur électrique (4), lorsque cette différence est supérieure à cette valeur maximale prédéterminée.

3. Procédé selon la revendication 2,
**caractérisé en ce que** l'on calcule ladite vitesse moteur estimée Vest, à l'aide de l'expression suivante :
Vest = (S.Vram)/cyl
dans laquelle:
- S représente la surface de la section transversale du piston (12) du vérin hydraulique (8) ;
- Vram est la vitesse courante mesurée de la tige (13) du vérin hydraulique (8) ; et
- cyl représente la cylindrée de la pompe (5).

4. Procédé selon l'une des revendications 2 et 3,
**caractérisé en ce que** l'on filtre ladite différence entre ladite vitesse moteur estimée et ladite vitesse moteur courante, avant de la comparer à ladite valeur maximale prédéterminée.

5. Actionneur à puissance électrique, ledit actionneur (1) comportant :
- un module de commande (2) susceptible de recevoir un signal électrique de commande et susceptible de convertir ce signal électrique de commande en une valeur de consigne pour un moteur électrique (4) ;
- ledit moteur électrique (4) qui est susceptible d'entraîner une pompe (5) conformément à ladite valeur de consigne reçue dudit module de commande (2) ;
- ladite pompe (5) qui est susceptible de générer une puissance hydraulique permettant de déplacer un vérin hydraulique (8) ;
- ledit vérin hydraulique (8) qui comprend deux chambres (9,10) susceptibles d'être alimentées par ladite pompe (5) et qui est susceptible d'engendrer l'effort de l'actionneur (1), lesdites chambres (9,10) étant séparées par un piston relié à une tige ; et
- au moins un clapet de surpression (11) pour limiter l'effort engendré par ledit actionneur (1), ledit clapet de surpression (11) étant ouvert automatiquement de manière à réaliser sa fonction de limitation lorsque la différence de pression entre les deux chambres (9,10) atteint une valeur prédéterminée, **caractérisé en ce que**
ledit actionneur (1) comporte de plus :
- des premiers moyens (18) pour réaliser une surveillance de manière à pouvoir détecter une ouverture dudit clapet de surpression (11) ;
- des deuxièmes moyens (19) pour calculer, lors de la détection d'une ouverture dudit clapet de surpression (11), une valeur de consigne auxiliaire qui permet, lorsqu'elle est appliquée au moteur électrique (4), de limiter la vitesse de ce dernier à une vitesse maximale prédéterminée qui est définie de manière à empêcher une surchauffe de l'actionneur (1) susceptible de l'endommager ;
- des troisièmes moyens (20) pour appliquer audit moteur électrique (4) ladite valeur de consigne auxiliaire, à la place de ladite valeur de consigne, lors de la détection d'une ouverture dudit clapet de surpression (11) ;
- des moyens (34) pour déterminer si le signal électrique de commande reçu a pour effet d'engendrer une différence de pression croissante ou une différence de pression décroissante dans le vérin hydraulique (8) ; et
- des moyens (35) pour inhiber l'application le cas échéant de ladite valeur de consigne auxiliaire audit moteur électrique (4), lorsque ledit signal électrique de commande reçu a pour effet d'engendrer une différence de pression décroissante en valeur absolue.

6. Actionneur selon la revendication 5,
**caractérisé en ce que** lesdits premiers moyens (18) comportent :
- un premier élément (23) pour mesurer la vitesse moteur courante dudit moteur électrique (4) ;
- un deuxième élément (24) pour mesurer la vitesse courante de la tige (13) dudit vérin hydraulique (8) ;
- un troisième élément (25) pour calculer, à partir de la vitesse courante mesurée de ladite tige (13), une vitesse moteur estimée, qui représente la vitesse du moteur électrique (4) permettant d'engendrer ladite vitesse courante mesurée pour la tige (13) du vérin hydraulique (8) ;
- un quatrième élément (27) pour calculer la différence entre ladite vitesse moteur estimée et ladite vitesse moteur courante ; et
- un cinquième élément (30) pour comparer cette différence à une valeur maximale prédéterminée, et pour détecter une ouverture dudit clapet de surpression (11), pour laquelle on applique ladite valeur de consigne auxiliaire audit moteur électrique (4), lorsque cette différence est supérieure à cette valeur maximale prédéterminée.

7. Actionneur selon la revendication 6,
**caractérisé en ce que** lesdits premiers moyens (18) comportent, de plus, - un sixième élément (38) pour filtrer ladite différence entre ladite vitesse moteur estimée et ladite vitesse moteur courante, avant de la transmettre audit cinquième élément (30).

8. Actionneur selon l'une des revendications 6 et 7,
**caractérisé en ce que** ledit troisième élément (25) comporte des moyens pour calculer ladite vitesse moteur estimée Vest, à l'aide de l'expression suivante :
Vest = (S.Vram)/cyl
dans laquelle :
- S représente la surface de la section transversale du piston (12) du vérin hydraulique,(8) ;
- Vram est la vitesse courante mesurée de la tige (13) du vérin hydraulique (8) ; et
- cyl représente la cylindrée de la pompe (5).

9. Système de commande d'une gouverne, en particulier d'une gouverne d'aéronef, ledit système (13) comportant au moins :
- un moyen de commande (14) permettant d'engendrer un signal électrique de commande ; et
- un actionneur (1) qui reçoit ledit signal électrique de commande et qui engendre un effort sur ladite gouverne (15) en fonction dudit signal électrique de commande reçu,
**caractérisé en ce que** ledit actionneur (1) est tel que celui spécifié sous l'une quelconque des revendications 5 à 8.

## Patentansprüche

1. Verfahren zur Steuerung eines Stellglieds (1), das umfasst:
- ein Steuermodul (2), das eingerichtet ist, ein elektrisches Steuersignal zu empfangen, und eingerichtet ist, das elektrische Steuersignal in einen Sollwert für einen Elektromotor (4) umzuwandeln;
- den Elektromotor (4), der eingerichtet ist, eine Pumpe (5) gemäß dem Sollwert, der von dem Steuermodul (2) empfangen wurde, anzutreiben;
- die Pumpe (5), die eingerichtet ist, eine hydraulische Kraft zu erzeugen, die es ermöglicht, einen hydraulischen Zylinder (8) zu bewegen;
- den Hydraulikzylinder (8), der zwei Kammern (9,10) umfasst, die eingerichtet sind, durch die Pumpe (5) versorgt zu werden, und der eingerichtet ist, die Kraft des Stellglieds (1) zu erzeugen, wobei die Kammern (9,10) durch einen Kolben getrennt sind, der mit einer Stange verbunden ist; und
- zumindest ein Überdruckventil (11) zum Begrenzen der Kraft, die von dem Stellglied (1) erzeugt wird, wobei das Überdruckventil (11) automatisch so geöffnet wird, um seine Begrenzungsfunktion durchzuführen, wenn die Druckdifferenz zwischen den beiden Kammern (9,10) einen vorbestimmten Wert erreicht,
wobei nach dem Verfahren automatisch eine Überwachung, um so eine Öffnung des Überdruckventils (11) zu erfassen, und beim Erfassen einer Öffnung des Überdruckventils (11) automatisch ausgeführt wird:
- Berechnen eines Hilfssollwerts, der es ermöglicht, wenn er auf den Elektromotor (4) angewendet wird, die Geschwindigkeit des letzteren auf eine vorbestimmte, maximale Geschwindigkeit zu begrenzen, die definiert ist, um eine Überhitzung des Stellglieds (1) zu verhindern, die imstande ist, es zu beschädigen; und
- Anwenden des Hilfssollwerts anstelle des Sollwertes auf den Elektromotor (4);
**gekennzeichnet durch**:
- Bestimmen, ob das empfangene, elektrische Steuersignal den Effekt hat, eine anwachsende Druckdifferenz oder eine abnehmende Druckdifferenz in dem Hydraulikzylinder (8) zu erzeugen; und
- Hemmen gegebenenfalls der Anwendung des Hilfssollwertes auf den elektrischen Motor (4), wenn das empfangene, elektrische Steuersignal den Effekt hat, eine abnehmende Druckdifferenz im absoluten Wert zu erzeugen.

2. Verfahren nach Anspruch 1, **dadurch gekennzeichnet, dass**, um die Überwachung durchzuführen:
- die aktuelle Motorgeschwindigkeit des Elektromotors (4) gemessen wird;
- die Geschwindigkeit der Stange (13) des Hydraulikzylinders (8) gemessen wird;
- ausgehend von der gemessenen, aktuellen Geschwindigkeit der Stange eine geschätzte Motorgeschwindigkeit berechnet wird, welche die Geschwindigkeit des Motors (4) darstellt, welche es ermöglicht, die aktuelle Geschwindigkeit zu erzeugen, die für die Stange (13) des Hydraulikzylinders (8) gemessen wird;
- die Differenz zwischen der geschätzten Motorgeschwindigkeit und der aktuellen Motorgeschwindigkeit berechnet wird; und
- die Differenz mit einem vorbestimmten, maximalen Wert verglichen wird, und eine Öffnung des Überdruckventils (11) erfasst wird, für welche der Hilfssollwert des Elektromotors (4) angewandt wird, wenn die Differenz den vorbestimmten, maximalen Wert überschreitet.

3. Verfahren nach Anspruch 2,
**dadurch gekennzeichnet, dass** die geschätzte Motorgeschwindigkeit Vest mit Hilfe des folgenden Ausdrucks berechnet wird:
Vest = (S.Vram) / cyl
wobei:
- S die Fläche des Querschnittes des Kolbens (12) des Hydraulikzylinders (8) darstellt;
- Vram die aktuelle Geschwindigkeit ist, die für die Stange (13) des Hydraulikzylinders (8) gemessen wird; und
- cyl den Hubraum der Pumpe (5) darstellt.

4. Verfahren nach einem der Ansprüche 2 und 3, **dadurch gekennzeichnet, dass** die Differenz zwischen der geschätzten Motorgeschwindigkeit und der aktuellen Motorgeschwindigkeit gefiltert wird, bevor sie mit dem vorbestimmten, maximalen Wert verglichen wird.

5. Elektrisches Stellglied, wobei das Stellglied (1) umfasst:
- ein Steuermodul (2), das eingerichtet ist, ein elektrisches Steuersignal zu empfangen, und eingerichtet ist, das elektrische Steuersignal in einen Sollwert für einen Elektromotor (4) umzuwandeln;
- den Elektromotor (4), der eingerichtet ist, eine Pumpe (5) gemäß dem Sollwert, der von dem Steuermodul (2) empfangen wurde, anzutreiben;
- die Pumpe (5), die eingerichtet ist, eine hydraulische Kraft zu erzeugen, die es ermöglicht, einen hydraulischen Zylinder (8) zu bewegen;
- den Hydraulikzylinder (8), der zwei Kammern (9,10) umfasst, die eingerichtet sind, durch die Pumpe (5) versorgt zu werden, und der eingerichtet ist, die Kraft des Stellglieds (1) zu erzeugen, wobei die Kammern (9,10) durch einen Kolben getrennt sind, der mit einer Stange verbunden ist; und
- zumindest ein Überdruckventil (11) zum Begrenzen der Kraft, die von dem Stellglied (1) erzeugt wird, wobei das Überdruckventil (11) automatisch so geöffnet wird, um seine Begrenzungsfunktion auszuführen, wenn die Druckdifferenz zwischen den beiden Kammern (9,10) einen vorbestimmten Wert erreicht, **dadurch gekennzeichnet, dass**
das Stellglied (1) außerdem umfasst:
- erste Mittel (18), um eine Überwachung umzusetzen, um so eine Öffnung des Überdruckventils (11) zu erfassen;
- zweite Mittel (19) zum Berechnen eines Hilfssollwerts während des Erfassens einer Öffnung des Überdruckventils (11), der es ermöglicht, wenn er auf den Elektromotor (4) angewendet wird, die Geschwindigkeit des letzteren auf eine vorbestimmte, maximale Geschwindigkeit zu begrenzen, die definiert ist, um so eine Überhitzung des Stellglieds (1) zu verhindern, die imstande ist, es zu beschädigen;
- dritte Mittel (20) zum Anwenden des Hilfssollwerts anstelle des Sollwertes auf den Elektromotor (4) während der Erfassens einer Öffnung des Überdruckventils (11);
- Mittel (34) zum Bestimmen, ob das empfangene elektrische Steuersignal den Effekt der Erzeugung einer anwachsenden Druckdifferenz oder einer abnehmenden Druckdifferenz in dem Hydraulikzylinder (8) hat; und
- Mittel (35) zum Hemmen gegebenenfalls der Anwendung des Hilfssollwerts auf den elektrischen Motor (4), wenn das empfangene, elektrische Steuersignal den Effekt hat, eine abnehmende Druckdifferenz im absoluten Wert zu erzeugen.

6. Stellglied nach Anspruch 5, **dadurch gekennzeichnet, dass** die ersten Mittel (18) umfassen:
- ein erstes Element (23) zum Messen der aktuellen Motorgeschwindigkeit des Elektromotors (4);
- ein zweites Element (24) zum Messen der gegenwärtigen Geschwindigkeit der Stange (13) des Hydraulikzylinders (8);
- ein drittes Element (25) zum Berechnen ausgehend von der gemessenen, aktuellen Geschwindigkeit der Stange einer geschätzten Motorgeschwindigkeit, welche die Geschwindigkeit des Elektromotors (4) darstellt, welche es ermöglicht, die aktuelle Geschwindigkeit, die für die Stange (13) des Hydraulikzylinders (8) gemessen wird, zu erzeugen;
- ein viertes Element (27) zum Berechnen der Differenz zwischen der geschätzten Motorgeschwindigkeit und der aktuellen Motorgeschwindigkeit; und
- ein fünftes Element (30) zum Vergleichen dieser Differenz mit einem vorbestimmten, maximalen Wert, und zum Erfassen einer Öffnung des Überdruckventils (11), für welche der Hilfssollwert auf den Elektromotor (4) angewandt wird, wenn diese Differenz diesen vorbestimmten, maximalen Wert überschreitet.

7. Stellglied nach Anspruch 6, **dadurch gekennzeichnet, dass** die ersten Mittel (18) außerdem ein sechstes Element (38) umfassen, um die Differenz zwischen der geschätzten Motorgeschwindigkeit und der aktuellen Motorgeschwindigkeit zu filtern, bevor sie an das fünfte Element (30) übertragen wird.

8. Stellglied nach einem der Ansprüche 6 und 7, **dadurch gekennzeichnet, dass** das dritte Element (25) Mittel umfasst, um die geschätzte Motorgeschwindigkeit Vest mit Hilfe des folgenden Ausdrucks zu berechnen:
Vest = (S.Vram) / cyl
wobei:
- S die Fläche des Querschnittes des Kolbens (12) des Hydraulikzylinders (8) darstellt;
- Vram die aktuelle Geschwindigkeit ist, die für die Stange (13) des Hydraulikzylinders (8) gemessen wird; und
- cyl den Hubraum der Pumpe (5) darstellt.

9. Steuersystem für ein Steuerruder, insbesondere ein Steuerruder eines Flugzeugs, wobei das System (13) mindestens umfasst:
- ein Steuermittel (14), welches das Erzeugen eines elektrischen Steuersignals ermöglicht; und
- ein Stellglied (1), welches das elektrische Steuersignal empfängt und welches eine Kraft auf das Steuerruder (15) als Funktion des empfangenen, elektrischen Steuersignals erzeugt,
**dadurch gekennzeichnet, dass** das Stellglied (1) derart ist wie dasjenige, das in einem der Ansprüche 5 bis 8 angegeben ist.

## Claims

1. A control method for an actuator (1) comprising:
- a control module (2) receiving a control electric signal and converting this control electric signal into a set-point value for an electric motor (4);
- said electric motor (4) driving a pump (5) according to said set-point value received from said control module (2);
- said pump (2) generating a hydraulic power allowing to move a hydraulic jack (8);
- said hydraulic jack (8) comprising two chambers (9,10) adapted to be supplied by said pump (5) and generating the effort of the actuator (1), said chambers (9,10) being separated by a piston connected to a stem; and
- at least one pressure relief valve (11) for limiting the effort generated by said actuator (1), said pressure relief valve (11) being automatically opened so as to implement its limitation function when the difference of pressure between the two chambers (9,10) reaches a predetermined value,
wherein, automatically, a monitoring is implemented, so as to be able to detect an opening of said pressure relief valve (11), and upon the detection of an opening of said pressure relief valve (11), automatically:
- an auxiliary set-point value is calculated, allowing, when it is applied to the electric motor (4), to limit the speed of the latter to a predetermined maximum speed being defined so as to prevent an overheat of the actuator (1) able to damage it; and
- said auxiliary set-point value is applied to said electric motor (4) instead of said set-point value, **characterized in that** automatically and repeatedly:
- it is determined whether the control electric signal being received has the effect of generating an increasing difference of pressure or a decreasing difference of pressure in the hydraulic jack (8); and
- if appropriate, the application of said auxiliary set-point value is inhibited, when said control electric signal being received has the effect of generating a decreasing difference of pressure in absolute value.

2. The method according to claim 1,
**characterized in that**, for implementing said monitoring:
- the current motor speed of said electric motor (4) is measured;
- the speed of the stem (13) of said hydraulic jack (8) is measured;
- from the measured current speed of said stem, an estimated motor speed is calculated, representing the speed of the motor (4) allowing to generate said measured current speed for the stem (13) of the hydraulic jack (8);
- the difference is calculated between said estimated motor speed and said current motor speed; and
- such difference is compared to a predetermined maximum value, and an opening is detected of said pressure relief valve (11), for which said auxiliary set-point value is applied to said electric motor (4), when such difference is higher than said predetermined maximum value.

3. The method according to claim 2,
**characterized in that** said estimated motor speed Vest is
calculated, by means of the following expression:
Vest = (S.Vram)/cyl
wherein:
- S represents the surface of the cross-section of the piston (12) of the hydraulic jack (8);
- Vram is the measured current speed of the stem (13) of the hydraulic jack (8); and
- cyl represents the capacity of the pump (5).

4. The method according to one of claims 2 and 3,
**characterized in that** said difference between said estimated motor speed and said current motor speed is filtered, before comparing it to said predetermined maximum value.

5. An electrical actuator, said actuator (1) comprising:
- a control module (2) receiving a control electric signal and converting this control electric signal into a set-point value for an electric motor (4);
- said electric motor (4) driving a pump (5) according to said set-point value received from said control module (2);
- said pump (5) generating a hydraulic power allowing to move a hydraulic jack (8);
- said hydraulic jack (8) comprising two chambers (9,10) adapted to be supplied by said pump (5) and generating the effort of the actuator (1), said chambers (9,10) being separated by a piston connected to a stem; and
- at least one pressure relief valve (11) for limiting the effort generated by said actuator (1), said pressure relief valve (11) being automatically opened so as to implement its limitation function when the difference of pressure between the two chambers (9, 10) reaches a predetermined value,
**characterized in that** said actuator further comprises:
- first means (18) for implementing a monitoring so as to be able to detect an opening of said pressure relief valve (11);
- second means (19) for calculating, upon the detection of an opening of said pressure relief valve (11), an auxiliary set-point value allowing, when being applied to the electric motor (4), to limit the speed of the latter to a predetermined maximum speed being defined so as to prevent an overheat of the actuator (1) able to damage it; and
- third means (20) for applying to said electric motor (4) said auxiliary set-point value, instead of said set-point value, upon the detection of an opening of said pressure relief valve (11);
means (34) for determining whether the control electric signal being received has the effect of generating an increasing difference of pressure or a decreasing difference of pressure in the hydraulic jack (8); and means (35) for inhibiting the application, if appropriate, of said auxiliary set-point value to said electric motor (4), when said control electric signal being received has the effect of generating a decreasing difference of pressure in absolute value.

6. The actuator according to claim 5,
**characterized in that** said first means (18) comprise:
- a first element (23) for measuring the current motor speed of said electric motor (4);
- a second element (24) for measuring the current speed of the stem (13) of said hydraulic jack (8);
- a third element (25) for calculating, from the current speed of said stem (13) being measured, an estimated motor speed, representing the speed of the electric motor (4) allowing to generate said measured current speed for the stem (13) of the hydraulic jack (8);
- a fourth element (27) for calculating the difference between said estimated motor speed and said current motor speed; and
- a fifth element (30) for comparing this difference to a predetermined maximum value, and for detecting an opening of said pressure relief valve (11), for which said auxiliary set-point value is applied to said electric motor (4), when such difference is higher than said predetermined maximum value.

7. The actuator according to claim 6,
**characterized in that** said first means (18) further comprise a sixth element (38) for filtering said difference between said estimated motor speed and said current motor speed, before transmitting it to the fifth element (30).

8. The actuator according to one of claims 6 and 7, **characterized in that** said third element (25) comprises means for calculating said estimated motor speed Vest, by means of the following expression:
Vest = (S.Vram)/cyl
wherein:
- S represents the surface of the cross-section of the piston (12) of the hydraulic jack (8);
- Vram is the measured current speed of the stem (13) of the hydraulic jack (8); and
- cyl represents the capacity of the pump (5).

9. A control system for a control surface, in particular a control surface of an aircraft, said system (13) comprising at least:
- a control means (14) allowing to generate a control electric signal; and
- an actuator (1) receiving said control electric signal and generating an effort on said control surface (15) as a function of said control electric signal being received,
**characterized in that** said actuator (1) is such as specified in any one of claims 5 to 8.
